# EUROPEAN PATENT SPECIFICATION

(11) **EP 1 332 988 B1**
(45) Date of publication and mention of the grant of the patent: **21.12.2005**
(21) Application number: 03075354.5
(22) Date of filing: 05.02.2003
(51) Int. Cl.: B65G 25/06

(54) **Support/guide for reciprocally movable slats of the floor of loading/unloading spaces**
Träger und Führungselement für hin- und hergehende Latten eines Flurförderers, zum Be- und Entladen von Räumen
Support ou guidage pour les lattes à mouvement va-et-vient d'un sol coulissant à charger ou décharger

(30) Priority: 05.02.2002 NL 1019901
(43) Date of publication of application: 06.08.2003
(73) Proprietor: Cargo Floor B.V., 7741 MK Coevorden (NL)
(72) Inventor: De Raad, Frans Arian Heino, 7742 PW Coevorden (NL); Mater, Nicolaas Marc, 7559 KK Hengelo (NL)
(74) Representative: Ferguson, Alexander

(56) References cited:
- US-A- 4 907 691
- US-A- 5 323 894
- US-A- 5 996 772

## Description

The invention relates to a support/guide for reciprocally movable slats of loading spaces, unloading spaces, storage spaces. Such floors are for instance known from lorries, trailers and self-unloading storage spaces.

It is known to support the slats for so-called reciprocally movable floors in a guiding manner on synthetic guides extending over the entire slat length, each guide being separately mounted on an accompanying longitudinal girder of the floor such as by means of clamping. A drawback of this is that a lot of material is necessary for the guides. Moreover, the entire guide will have to be replaced in case of local damage.

It is furthermore known to use short synthetic guides, which are only placed at the location where the aforementioned longitudinal girders are supported by cross girders of the floor. A drawback of this is that the mounting of the guide takes a lot of time.

It is an object of the invention to improve on this.

It is a further object of the invention to provide a support/guide of the type mentioned in the preamble, that can easily be adapted to the need.

It is a further object of the invention to provide a support/guide of the type mentioned in the preamble which is easy and quick to mount.

It is a further object of the invention to provide a support/guide of the type mentioned in the preamble, which renders the use of the aforementioned longitudinal girders superfluous.

It is a further object of the invention to provide a support/guide of the type mentioned in the preamble, which can be manufactured with a minimum quantity of material.

From one aspect the invention to that end provides a support/guide for reciprocally movable slats of a floor of a cargo space, such as a lorry or trailer, or a loading/unloading station, as described in claim 1. The slat support members are supported on the cross girders via the base strip, so that the longitudinal girders are no longer needed to that end. By using a moulding process the support/guide can easily be manufactured in a shape/design/dimension adapted to what is needed.

Preferably the support/guide is manufactured by means of injection moulding. By means of injection moulding the support/guide can easily be made in a shape exactly adjusted to the floor in question and be mounted as a whole.

Preferably the support/guide is provided with at least four slat support members. This considerably facilitates the mounting of the floor, because many, for instance seven slat support members have been aligned beforehand.

Preferably at at least one of the longitudinal edges the base strip is provided with stop means, particularly pendent stop strips. They can easily be injection moulded along, and are an aid in the correct placing of the base strip on the cross girder as well as a stop against axial displacement on it. In case both edges have been provided with stop means, the distance in between then preferably corresponds to the width of the cross girder.

Preferably the slat support members are provided with attachment holes extending through them and through the base strip, which attachment holes comprise a lower portion for accommodation of the head of an attachment means such as a blind rivet or bolt, and a broadened upper portion for accommodation of a contact portion of a tool for driving in the attachment means. This facilitates the mounting, in which the head of the tool can be centred.

Preferably the slat support members are provided with attachment holes extending through them and through the base strip, the attachment holes being staggered with respect to each other for adjacent slat support members, in a direction transverse to the base strip direction. As a result the attachment on an I-profile-shaped cross girder is improved, as the attachment means can for instance extend alternatingly adjacent to its web.

Preferably the slat support members have an upper portion flaring in transverse direction of the base strip, the flaring upper portion forming a slat support/guide surface at its upper surface. In this way -of so desired- a large support surface can be realised for improved support and guidance of the slats. The slat support/guide surface can be wider than the base strip.

Preferably the upper portion of the slat support members changes into a lower foot portion, which changes into the base strip and preferably has the same width as the base strip.

Preferably the slat support means have an upper portion widened with respect to the foot portion in longitudinal direction of the base strip, as a result of which the material is used where it is needed for support of the slats, and furthermore space is provided to possible bottom flanges of the slats, as may be usual.

Preferably the end edges of the slat support/guide surface that run parallel to the base strip are rounded off, so that as it were a pilot edge is provided, which facilitates the moving up of slats in longitudinal direction during mounting.

In an advantageous manner the supply of material during injection moulding takes place from the upper side of the slat support members. As a result the supply of material and the distribution in the mould is improved. Furthermore the shape of the base strip can easily be adapted by means of insert pieces, the shape of the slat support member not having to be changed.

It is possible for instance to have the supply of injection moulding material for adjacent slat support members take place at locations that are staggered with respect to each other, in a direction transverse to the base strip direction, just like in the case of the attachment holes mentioned earlier.

For increasing the grip on the cross girder it is advantageous when the lower side of the base strip is provided with longitudinal ribs.

Saving on material and weight is further improved when the slat support members comprise walls which leave hollow cavities free in between them.

From a further aspect the invention provides a loading or storage space provided with a floor having reciprocally movable slats, the slats being supported on supports/guides according to the invention.

The invention will be elucidated on the basis of the exemplary embodiment shown in the attached drawings, in which:
Figure 1 shows a side view of an exemplary embodiment of the support/guide according to the invention;
Figure 2 shows a top view of the support/guide of figure 1;
Figure 3 shows a side view of a slat support member of the support/guide according to figures 1 and 2;
Figure 4 shows a cross-section according to arrow IV-IV in figure 3;
Figure 5 shows a cross-section according to arrow V-V of figure 3; and
Figures 6A and 6B show the support/guide of the previous figures mounted in a (partially shown) floor of a cargo space.

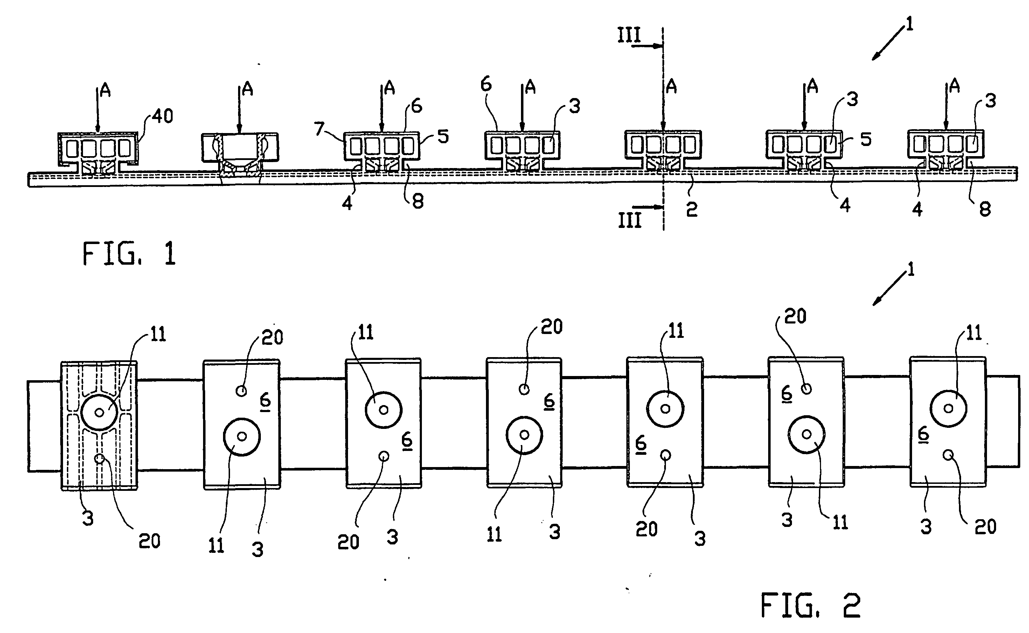

The support/guide 1 of figure 1, is integrally formed from a suitable synthetic material such as HDPE, by means of injection moulding.

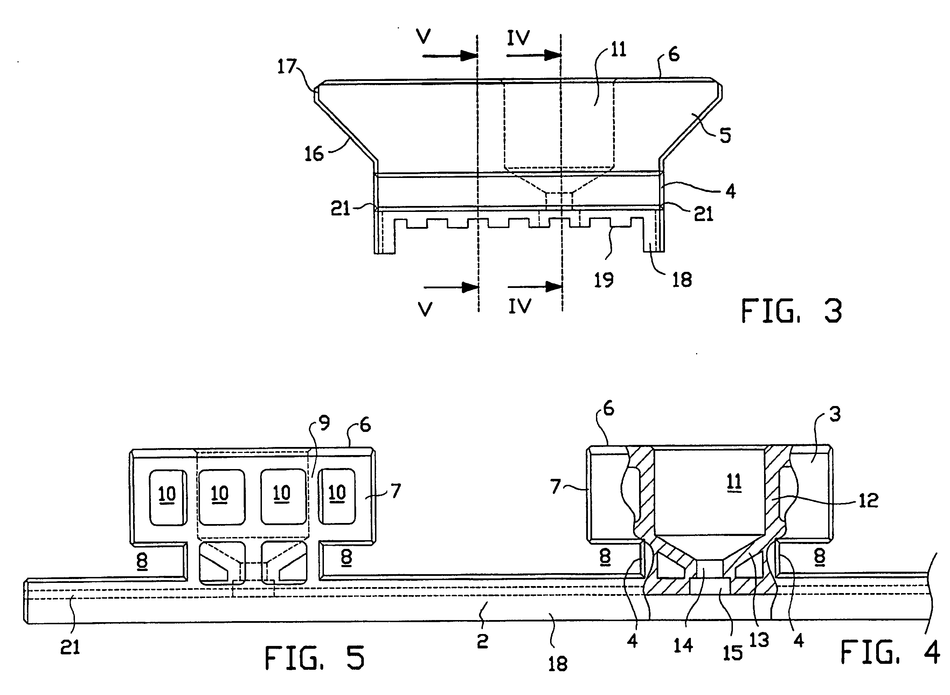

The support/guide 1 comprises an elongated base strip 2 having, as can be seen in figure 3, pendent edge strips 18, as placing aid, and longitudinal ribs 19 at the lower surface, for improvement of grip. The upper portions (surfaces) of the longitudinal edges of the base strip 2 are rounded off at the location of 21, as pilot edges for the slats during moving up during mounting and during use. At the upper side of the base strip 2 -in this case- seven slat support members have been integrally formed, each consisting of a relatively narrow lower portion 4 and a relatively broad upper portion 5. The upper portion 5 forms a support and guide surface 6, which, as can be seen in figure 2, has a larger length than the width of the base strip 2. As can be seen in figure 3 the lower portion 4 has the same width as the base strip 2, and the upper portion 5 upwardly tapers off with inclined edges 1 6 into broadened surface 6, via rounded off pilot edges 17.

Both the lower portion 4 and the upper portion 5 have been provided with recesses, in the upper portion 5 by means of partitions 9, positioned between the side walls 7, and thus and with each other defining longitudinal chambers 10.

As can also be seen in figure 2, particularly in figure 4, at the location of each slat support member 3, vertical continuous holes have been provided in a staggered manner, considered in horizontal direction transverse to the longitudinal direction of the base strip 2, which continuous holes have a relative wide circular upper portion 11, surrounded by wall 12, than a conical portion defined by wall 13, and subsequently a circular end portion 14, and finally contiguously an enlarged hole 15 in the base plate 2. The portion 11 serves for accommodation of the head of for instance a tool for arranging blind rivets. The conical space serves for the accommodation of the head of the blind rivet, the other end of which engaging the counter surface of an upper wall of cross girder that is not further shown. The enlarged hole 15 may offer room to the burrs on the cross girders.

In figure 2 it can be seen that the holes 11 are staggered. The imprints 20 are also staggered, which imprints indicate where the injection mould gates were situated in the injection mould. During injection moulding material is supplied in the direction A (see figure 1) via the gates 20, in order to injection mould the entire support/guide 1. By means of suitable insert pieces in the mould the thickness of the base strip 2 as well as its shape (ribs or no ribs, no, one or two pendent edges 18) can be adjusted to the needs.

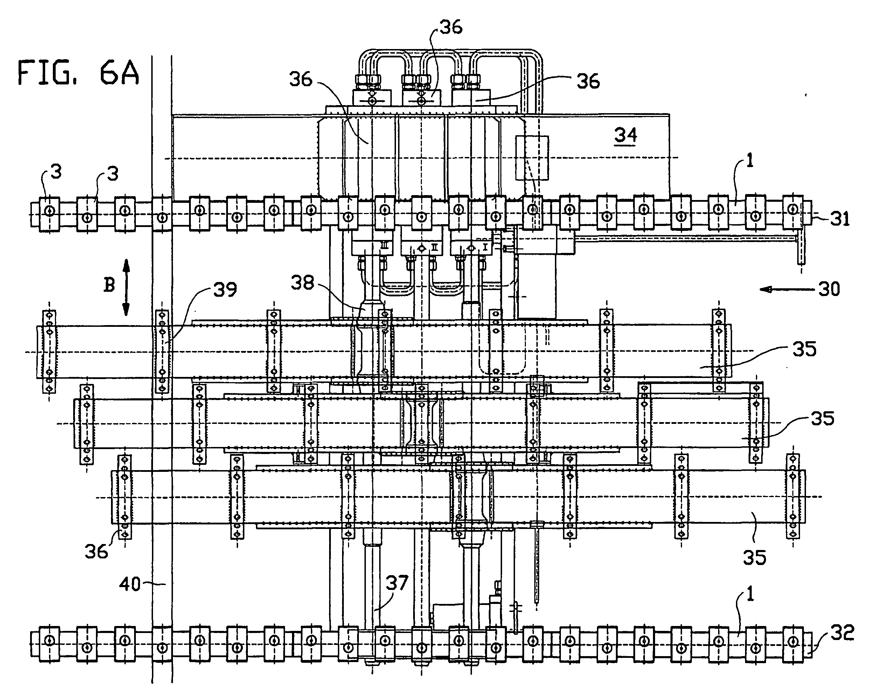

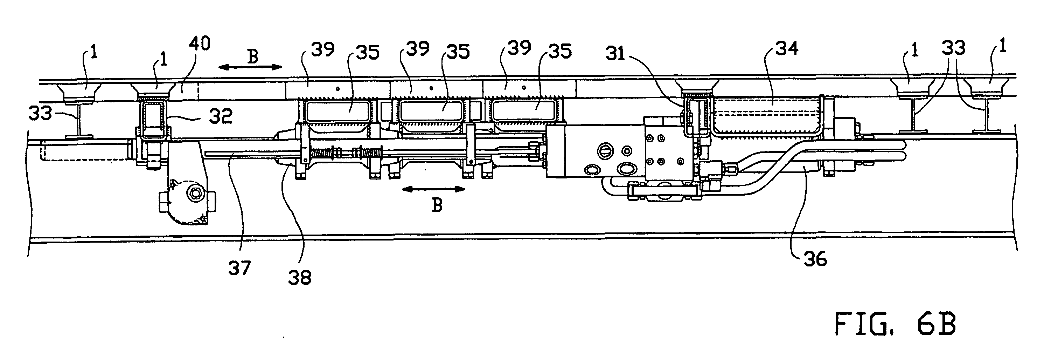

In figure 6A a top view is shown of a drive unit 30 of a so-called floor having reciprocally movable slats, which drive unit comprises three drive girders 35, each provided with a number of attachment sleeves 39, on which slats 40 can be attached (only one slat is shown), each drive girder 35 being driven by one of three cylinders 36. The cylinders 36 have been attached on a bridge girder 34. The piston rods 37 accompanying the cylinders 36 have each been attached to an accompanying drive girder 35 at the location of attachment 38, and at their ends are slideably supported in cross girder 32. Adjacent to bridge girder 34 cross girder 31 is present, also see figure 6B, in which the drive unit with contiguous parts of the loading floor is shown in vertical cross section.

In the figures 6A and 6B it can be seen that on the cross girders 31 and 32 a number of supports/guides 1 of the previous figures have been attached. Furthermore it is shown in figure 6B that the same supports/guides 1 are also attached on the cross girders 33 of the loading floor. The slats 40 have moved up in longitudinal direction over the various consecutive slat support members 3 and over the finger 36 in question, and have been attached to the latter. When the drive girder 35 reciprocally moves, the slats 40 slide over the slat support members 3. In figure 1, left-hand side, a cross-section of slat 40 is schematically shown, in which it can be seen that it engages in the spaces 8 with the lower flanges.

## Claims

1. Support/guide (1) for reciprocally movable slats (40) of a floor of a cargo space, such as a lorry or trailer, or a loading/unloading station, the support/guide comprising a base strip (2) for support on a cross girder (33) of the floor, the base strip being provided with a number of slat support members (3) extending upwards from it and manufactured integrally therewith by moulding, which slat support members (3) are situated adjacent to each other and spaced apart in base strip direction.

2. Support/guide (1) according to claim 1, the support/guide being manufactured by means of injection moulding.

3. Support/guide (1) according to claim 1 or 2, provided with at least four slat support members (3).

4. Support/guide (1) according to claim 1, 2 or 3, the base strip (2) at the longitudinal edges being provided with pendent stop means, particularly stop strips (18).

5. Support/guide (1) according to any one of the claims 1-4, the slat support members (3) being provided with attachment holes extending through them and through the base strip (2), which attachment holes comprise a lower portion (15) for accommodation of the head of an attachment means such as a blind rivet or bolt, and a broadened upper portion (11) for accommodation of a contact portion of a tool for driving in the attachment means.

6. Support/guide (1) according to any one of the claims 1-5, the slat support members (3) being provided with attachment holes (11-15) extending through them and through the base strip, the attachment holes (11-15) being staggered with respect to each other for the adjacent slat support members, in a direction transverse to the base strip direction.

7. Support/guide (1) according to any one of the preceding claims, the slat support members (3) having an upper portion (5) flaring in transverse direction of the base strip (2), the flaring upper portion forming a slat support/guide surface (6) at its upper surface, wherein, preferably, the slat support/guide surface (6) is wider than the base strip (2).

8. Support/guide (1) according to claim 7, the upper portion of the slat support members (3) changing into a lower foot portion (4), which changes into the base strip (2) and preferably has the same width as the base strip (2).

9. Support/guide (1) according to claim 7 or 8, the slat support members (3) having a upper portion (5) widened with respect to the foot portion (4) in longitudinal direction of the base strip (2).

10. Support/guide (1) according to claim 7, 8 or 9, the end edges (17) of the slat support/guide surface that run parallel to the base strip (2) being rounded off.

11. Support/guide (1) according to claim 2, the supply of material during injection moulding having taken place from the upper side of the slat support members (3), wherein, preferably, the supply of injection moulding material for adjacent slat support members has taken place at locations (20) that are staggered with respect to each other, in a direction transverse to the base strip (2) direction.

12. Support/guide (1) according to claims 5 and 11, the supply locations (20) and the attachment holes (11-15) being alternatingly changed for adjacent slat support members (3).

13. Support/guide (1) according to any one of the preceding claims, the lower side of the base strip being provided with longitudinal ribs (19).

14. Support/guide (1) according to any one of the preceding claims, the base strip (2) at the longitudinal edges (21) of its upper surface being rounded off.

15. Support/guide (1) according to any one of the preceding claims, the base strip at the lower side being provided with an access to attachment holes, the access being enlarged.

16. Support/guide (1) according to any one of the preceding claims, the slat support members (3) comprising walls which leave hollow cavities (10) free in between them.

17. Support/guide (1) according any one of the preceding claims, each slat support member (3) being adapted for slidingly receiving one slat (40).

18. Support/guide (1) according any one of the preceding claims, the slat support member (3) having an upper portion (5) formed integral therewith, said portion (5) forming a slat guiding and supporting surface (6).

19. Support/guide (1) according to any one of the preceding claims, made from HDPE.

20. Load or storage space provided with a floor having reciprocally movable slats (40), the slats being supported on supports/guides (1) according to any one of the preceding claims.

## Patentansprüche

1. Stütze/Führungselement (1) für hin- und herbewegliche Latten (40) eines Bodens eines Frachtraums, wie eines Lastwagens oder -Anhängers, oder einer Be- oder Entladungsstation, wobei die Stütze/das Führungselement einen Basisstreifen (2) für Auflagerung auf einem Querträger (33) des Bodens umfaßt, wobei der Basisstreifen mit einer Anzahl davon aufwärts reichender und durch Formen als ein Ganzes damit hergestellter Bretterstützteile (3) versehen ist, welche Bretterstützteile (3) nebeneinander und in Basisstreifenrichtung auf Abstand voneinander gelegen sind.

2. Stütze/Führungselement (1) nach Anspruch 1, wobei die Stütze/das Führungselement durch Spritzgießen hergestellt sind.

3. Stütze/Führungselement (1) nach Anspruch 1 oder 2, mit zumindest vier Bretterstützteilen (3) versehen.

4. Stütze/Führungselement nach Anspruch 1, 2 oder 3, wobei der Basisstreifen (2) an den Längsrändern mit hängenden Anschlagmitteln, insbesondere Anschlagstreifen (18), versehen ist.

5. Stütze/Führungselement nach einem der Ansprüche 1-4, wobei die Bretterstützteile (3) mit dadurchhin und durch den Basisstreifen (2) hin reichenden Befestigungslöchern versehen sind, welche Befestigungslöcher einen unteren Abschnitt (15) für Aufnahme des Kopfes eines Befestigungsmittels, wie eines Blindniets oder Bolzens umfassen, und einen erweiterten oberen Abschnitt (11) für Aufnahme eines Kontaktabschnitts eines Arbeitsgeräts zum Eintreiben des Befestigungsmittels.

6. Stütze/Führungselement nach einem der Ansprüche 1-5, wobei die Bretterstützteile (3) mit dadurchhin und durch den Basisstreifen hin reichenden Befestigungslöchern (11-15) versehen sind, wobei für nebeneinander gelegene Bretterstützteile die Befestigungslöcher versetzt bezüglich einander gelegen sind, in einer Richtung quer auf der Basisstreifenrichtung.

7. Stütze/Führungselement nach irgendeinem der Ansprüche, wobei die Bretterstützteile (3) einen in Querrichtung des Basisstreifens (2) ausdehnenden oberen Abschnitt (5) haben, wobei der ausdehnende obere Abschnitt an der Oberfläche eine Bretterstütze/Führungsfläche (6) bildet, worin, vorzugsweise, die Bretterstütze/Führungsfläche breiter ist als der Basisstreifen.

8. Stütze/Führungselement nach Anspruch 7, wobei der obere Abschnitt der Bretterstützteile (3) in einen unteren Fußabschnitt (4) übergeht, welcher in einen Basisstreifen (2) übergeht und vorzugsweise derselbe Breite hat als der Basisstreifen (2).

9. Stütze/Führungselement (1) nach Anspruch 7 oder 8, wobei die Bretterstützteile (3) einen in Längsrichtung des Basisstreifens (2) bezüglich des Fußabschnitts (4) erweiterten oberen Abschnitt (5) haben.

10. Stütze/Führungselement (1) nach Anspruch 7, 8 oder 9, wobei die parallel zum Basisstreifen (2) laufenden Endränder (17) der Bretterstütze/Führungsfläche abgerundet sind.

11. Stütze/Führungselement (1) nach Anspruch 2, wobei während dem Spritzgießen die Materialzufuhr ab der Oberseite der Bretterstützteile (3) stattgefunden hat, wobei, vorzugsweise, die Spritzgießmaterialzufuhr für nebeneinander gelegene Bretterstützteile auf versetzt bezüglich einander gelegenen Stellen (20) stattgefunden hat, in einer Richtung quer auf der Basisstreifenrichtung (2).

12. Stütze/Führungselement (1) nach Ansprüchen 5 und 11, wobei die Zufuhrstellen (20) und die Befestigungslöcher (11-15) für nebeneinander gelegene Bretterstützteile (3) abwechselnd verwechselt sind.

13. Stütze/Führungselement (1) nach irgendeinem der vorhergehenden Ansprüche, wobei die Unterseite des Basisstreifens mit Längsrippen (19) versehen ist.

14. Stütze/Führungselement (1) nach irgendeinem der vorhergehenden Ansprüche, wobei der Basisstreifen (2) an den Längsrändern (21) seiner Oberfläche abgerundet ist.

15. Stütze/Führungselement (1) nach irgendeinem der vorhergehenden Ansprüche, wobei der Basisstreifen an der Unterseite mit einem Zugang zu Befestigungslöchern versehen ist, wobei der Zugang erweitert ist.

16. Stütze/Führungselement (1) nach irgendeinem der vorhergehenden Ansprüche, wobei die Bretterstützteile (3) Wände umfassen, die zwischen sich Hohlräume (10) freilassen.

17. Stütze/Führungselement (1) nach irgendeinem der vorhergehenden Ansprüche, wobei jedes Bretterstützteil (3) zum gleitend Empfanges eines Bretts angepasst ist.

18. Stütze/Führungselement (1) nach irgendeinem der vorhergehenden Ansprüche, wobei das Bretterstützteil (3) einen als ein Ganzes damit geformten oberen Abschnitt (5) hat, wobei der Abschnitt (5) eine Brettführende und -stützende Fläche (6) bildet.

19. Stütze/Führungselement (1) nach irgendeinem der vorhergehenden Ansprüche, aus HDPE hergestellt.

20. Lade- oder Lagerraum mit einem Boden mit hin und her beweglichen Brettern (40) versehen, wobei die Better auf Stützen/Führungselementen (1) nach irgendeinem der vorhergehenden Ansprüche gestützt sind.

## Revendications

1. Support/guide (1) de lattes mobiles en va-et-vient (40) d'un plancher d'espace utilitaire, tel qu'un camion ou un semi-remorque, ou un poste de chargement/déchargement, le support/guide comportant une bande de base (2) destinée à être supportée sur une traverse (33) du plancher, la bande de base étant munie de plusieurs éléments de support de lattes (3) s'étendant vers le haut à partir de celle-ci et fabriqués d'un seul tenant avec celle-ci par moulage, lesquels éléments de support de lattes (3) sont situés adjacents l'un à l'autre et espacés dans la direction de la bande de base.

2. Support/guide (1) selon la revendication 1, le support/guide étant fabriqué par l'intermédiaire d'un moulage par injection.

3. Support/guide (1) selon la revendication 1 ou 2, muni d'au moins quatre éléments de support de lattes (3).

4. Support/guide (1) selon la revendication 1, 2 ou 3, la bande de base (2) au niveau des bords longitudinaux étant munie de moyens d'arrêt suspendus, en particulier des bandes d'arrêt (18).

5. Support/guide (1) selon l'une quelconque des revendications 1 à 4, les éléments de support de lattes (3) étant munis de trous de fixation s'étendant à travers ceux-ci et à travers la bande de base (2), lesquels trous de fixation comportent une partie inférieure (15) destinée à recevoir la tête de moyens de fixation tels qu'un rivet, ou un boulon, aveugle, et une partie supérieure élargie (11) pour recevoir une partie de contact d'un outil destiné à entraîner les moyens de fixation.

6. Support/guide (1) selon l'une quelconque des revendications 1 à 5, les éléments de support de lattes (3) étant munis de trous de fixation (11 à 15) s'étendant à travers ceux-ci et à travers la bande de base, les trous de fixation (11 à 15) étant décades les uns par rapport aux autres pour les éléments de support de lattes adjacents, dans une direction transversale par rapport à la direction de la bande de base.

7. Support/guide (1) selon l'une quelconque des revendications précédentes, les éléments de support de lattes (3) ayant une partie supérieure (5) s'évasant dans une direction transversale par rapport à la bande de base (2), la partie supérieure s'évasant formant une surface de support/guide de lattes (6) à sa surface supérieure, la surface de support/guide de lattes (6) étant de préférence plus large que la bande de base (2).

8. Support/guide (1) selon la revendication 7, la partie supérieure des éléments de support de lattes (3) se changeant en une partie de pied inférieur (4), qui se change en la bande de base (2) et de préférence a la même largeur que la bande de base (2).

9. Support/guide (1) selon la revendication 7 ou 8, les éléments de support de lattes (3) ayant une partie supérieure (5) élargie par rapport à la partie de pied (4) dans la direction longitudinale de la bande de base (2).

10. Support/guide (1) selon la revendication 7, 8 ou 9, les bords d'extrémité (17) de la surface de support/guide de lattes qui s'étendent parallèlement à la bande de base (2) étant arrondis.

11. Support/guide (1) selon la revendication 2, l'alimentation en matériau pendant le moulage par injection ayant lieu à partir du côté supérieur des éléments de support de lattes (3), de préférence, l'alimentation en matériau de moulage par injection pour des éléments de support de lattes adjacents ayant lieu à des emplacements (20) qui sont décadés les uns par rapport aux autres, dans une direction transversale par rapport à la direction de la bande de base (2).

12. Support/guide (1) selon les revendications 5 et 11, les emplacements d'alimentation (20) et les trous de fixation (11 à 15) étant alternativement changés pour des éléments de support de lattes adjacents (3).

13. Support/guide (1) selon l'une quelconque des revendications précédentes, le côté inférieur de la bande de base étant muni de nervures longitudinales (19).

14. Support/guide (1) selon l'une quelconque des revendications précédentes, la bande de base (2) au niveau des bords longitudinaux (21) de sa surface supérieure étant arrondie.

15. Support/guide (1) selon l'une quelconque des revendications précédentes, la bande de base au niveau du côté inférieur étant munie d'un accès aux trous de fixation, l'accès étant agrandi.

16. Support/guide (1) selon l'une quelconque des revendications précédentes, les éléments de support de lattes (3) comportant des parois qui laissent entre elles des cavités creuses (10) libres.

17. Support/guide (1) selon l'une quelconque des revendications précédentes, chaque élément de support de lattes (3) étant adapté pour recevoir de manière coulissante une latte (40).

18. Support/guide selon l'une quelconque des revendications précédentes, l'élément de support de lattes (3) ayant une partie supérieure (5) formée d'un seul tenant avec celui-ci, ladite partie (5) formant une surface de guidage et de support de lattes (6).

19. Support/guide (1) selon l'une quelconque des revendications précédentes, réalisé en HDPE.

20. Espace de chargement ou de stockage muni d'un plancher ayant des lattes mobiles en va-et-vient (40), les lattes étant supportées sur des supports/guides (1) selon l'une quelconque des revendications précédentes.
